(19) Europäisches Patentamt / European Patent Office / Office européen des brevets

(11) **EP 3 546 316 B1**

(12) **EUROPEAN PATENT SPECIFICATION**

(45) Date of publication and mention of the grant of the patent:
**14.02.2024 Bulletin 2024/07**

(21) Application number: **19170141.6**

(22) Date of filing: **24.06.2013**

(51) International Patent Classification (IPC):
**B62B 9/00** *(2006.01)* **B62B 5/00** *(2006.01)*

(52) Cooperative Patent Classification (CPC):
**B62B 9/00;** B62B 5/0046; B62B 5/0073

(54) **AUTOMATIC ELECTRICAL PROPULSION FOR PRAMS OR STROLLER**

AUTOMATISCHER ELEKTRISCHER ANTRIEB FÜR KINDERWAGEN UND KINDERBUGGYS

PROPULSION ÉLECTRIQUE AUTOMATIQUE POUR LANDAUS OU POUSSETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(62) Document number(s) of the earlier application(s) in accordance with Art. 76 EPC:
**13466010.9 / 2 818 382**

(73) Proprietor: **Goodbaby Mechatronics s.r.o.**
**186 00 Praha 8 - Karlin (CZ)**

(72) Inventor: **SPOUR, Jiri**
**25241 Zlatniky-Hodkovice (CZ)**

(74) Representative: **Meissner Bolte Partnerschaft mbB**
**Patentanwälte Rechtsanwälte**
**Postfach 86 06 24**
**81633 München (DE)**

(56) References cited:
EP-A1- 1 630 061     DE-U1-202007 008 851
DE-U1-202011 109 457     DE-U1-202011 109 457
FR-A1- 2 688 181     US-B1- 7 987 933
US-B1- 8 033 348

## Description

### Field of the Invention

The invention concerns the additional electrical propulsion for the standard pram or stroller but the propulsion is activated automatically only when it is useful on. the ascent or on the flat surface with the heavy load of the pram. The purpose of the invention is to implement fully-automatic propulsion on the pram or stroller as easy to operate as a normal pram/stroller without propulsion.

### Background of the invention

The prior art includes prams/strollers with basic propulsion. A person operating the pram/stroller has to regulate the speed with the accelerator lever manually (US 8,033,348 or DE 20 2011 209 457 U1). FR 2 688 181 A describes a propulsion control with a bar under the handle. DE 20 2007 008 851 U1 discloses two electric motors and two control devices for each of the motors.

The actual state of this art includes prams/strollers with electric engine and accelerator lever; and a person who is operating the pram/stroller has to regulate the speed with the accelerator lever manually. It is necessary to place the accelerator lever on the pram's handle and a person who is operating the pram has to use one hand or some fingers for operate the lever and therefore his/her attention is not fully focused on the pram's control.

### Technical problems to be solved

The below mentioned problems are the primary reasons why electric propulsion is not widely required on the market at the moment. Therefore most of the sold prams/strollers are sold without any propulsion.

The first group of problems concerns the technical or ergonomic aspects for operating the electric pram/stroller with manual control lever:

> 1) The usage of a pram with electric engine and accelerator lever is not natural. It is necessary and could be difficult to coordinate the accelerator lever, the pushing and the handling.

> 2) The hands position of the person who is operating the pram is different than the normal pram without propulsion.

> 3) The person who is operating the pram has to divide his/her attention to control the propulsion.

> 4) There is a problem with the smoothness of the pram's movements, because the surface of the way is not straight and the engine does not have enough feedback power to sustain the pram's speed.

> 5) The moment of switching on and off is not automatically defined and depends on the person who is operating the pram.

> 6) The maximum speed of a pram with propulsion is very low due to safety concerns for the baby.

> 7) And the last but not least problem is that the accelerator lever has a bad impact on the design of the pram/stroller.

The second group of problems concerns the safety of the baby. There are not sensors or any other devices which would stop the propulsion and the pram's movement in case of danger which implies that it can come to pass several dangerous situations:

> 1) Failure of the electrical circuits could cause uncontrolled movement of the pram/stroller and bring potential danger to the baby.
> 2) The person who is operating the pram or stroller could make a mistake with the manipulation of the lever and it can bring potential danger to the baby.
> 3) The person who is operating the pram/stroller could have a sudden impairing health situation and it could cause uncontrolled movement and bring potential danger to the baby.

### Disclosure of invention

The solution according to the invention is defined in the appended claims.

The invention concerns additional electrical propulsion for the standard pram or stroller. However, the propulsion is not directly controlled by the person who is pushing the pram but is controlled by a micro-computer automatically.

Preferably, the electric propulsion is activated only in case the pushing force $(F_p)$ rises above the defined activation level $(F_{on})$; the other way the electric propulsion is deactivated in case the pushing force $(F_p)$ falls under the defined deactivation level $(F_{off})$ which implies two operation modes:

> a. Active mode - $F_p$ reaches $F_{on}$ and simultaneously $F_p$ does not fall under $F_{off}$.
> The electric engine drives the rear wheels so that median value of $F_p$ will be constant and be equal to $F_{on}$.
> b. Non active mode - $F_p$ does not reach $F_{on}$ or $F_p$ fall under $F_{off}$.

For example in case of a descent.

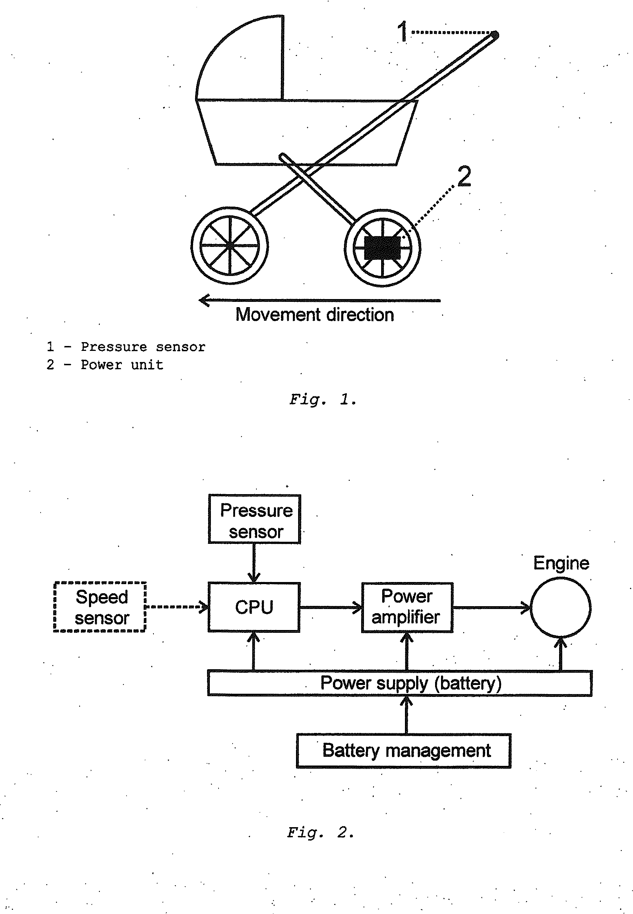

There is a power unit on the rear end of the pram's chassis and it is placed between the rear wheels. The front wheels are independent from the rear wheels therefore the front wheels could keep on revolving. And the last component of the system is a pressure sensor (it can be mechanical or electrical) placed on the pram's handle which is the only component placed outside of the power unit (Fig. 1).

In case of active mode the revolution of the engine is controlled by the CPU depending on the pressure force of the person who is operating the pram/stroller. And then the revolution of the engine is:

$$n = f \left( P_i; R; A_k \right)$$

n    the revolution of the engine
$P_i$    the input engine's power
R    the engine's load
$A_k$    engine's parameter constant

There is only one variable that can affect the revolution in real which is the input engine's power ($P_i$). The engine's parameters are given, therefore $A_k$ is constant. And the engine's load is not possible to be predicted in advance of real time. It is necessary to think how is the pressure force ($F_p$) changing in real time. Because the pressure force ($F_p$) is not constant, it is necessary to control the input engine's power depending on the average pressure force in a definite elapse of time.

It could be convenient to measure the real engine's revolution and control the input engine's power to keep the engine's revolution constant. The change of the engine's revolution depends on the change of the average pressure force.

Electronic components (Fig. 2):

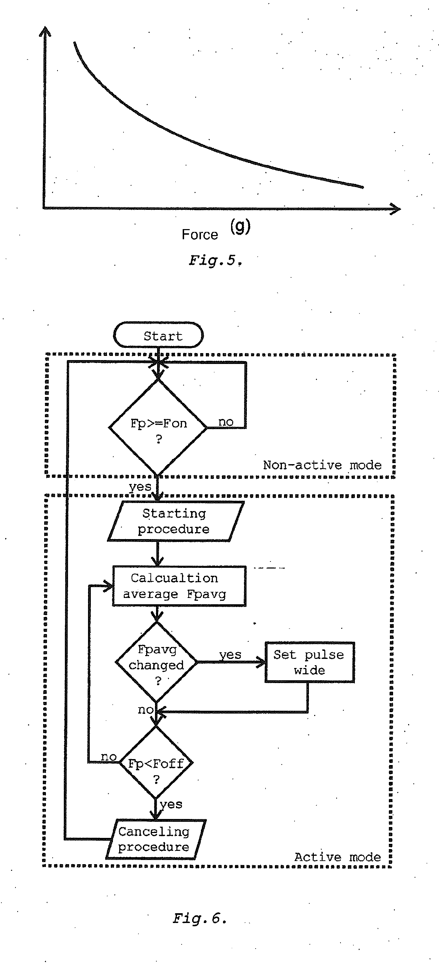

a) The CPU (central processing unit)
This component is an 8 bit microprocessor that controls input and output signals and all the logic around the propulsion (input power of the engine and alternatively the switching of the clutch). In case of DC engine we can use the wide pulse modulation (PWM) for controlling the engine (the flow chart is shown in Fig. 6).

Input signals:

• actual pushing force
• actual wheel's speed (optional)

Output signals:

• the signal for the amplifier which controls the engine's revolution
• alternatively the switching on or off the clutch
• the other signalization

Basic parameters for DC engine:

• the optimal PWM signal frequency is between 500Hz and 1kHz
• the microprocessor clock rate has to be at least 1000x higher than the PWM signal frequency
• the optimal period for average pushing force calculation is 1,5s,
• the microprocessor has to have an A/D convertor.

b) The pressure sensor
There is the pressure sensor on the pram's handle which measures the intensity of the pushing force ($F_p$). This sensor can be mechanical or electrical and it is connected directly to the A/D input of the CPU. In case of the electrical sensor, the sensor is placed in the central area of the pram's handle. This sensor changes its internal resistance depending on the pressure of the mechanical force (Fig. 5).

c) The speed sensor
This sensor measures the number of revolutions of the rear wheels or rather the rear shaft before the differential. This component is not necessary for the basic principle of this invention but can provide the linear operation and the run-up of the engine.

d) The power amplifier
The semi-conductor MOSFET transistor supplies power to the engine. The parameters of this transistor are dependent primarily on the required input power of the engine.

e) The battery pack
It is possible to use any kind of battery but in this case it is necessary to use batteries with low weight, with high output current, with large capacity and sufficiently safe. The nominal voltage and total capacity are dependent on the chosen engine.

f) The battery control unit
It is the electronic circuit which controls the primary switching on or off and the discharging of battery. Battery charging is solved externally because it is necessary to take the battery out of the pram/stroller and charging it separately.

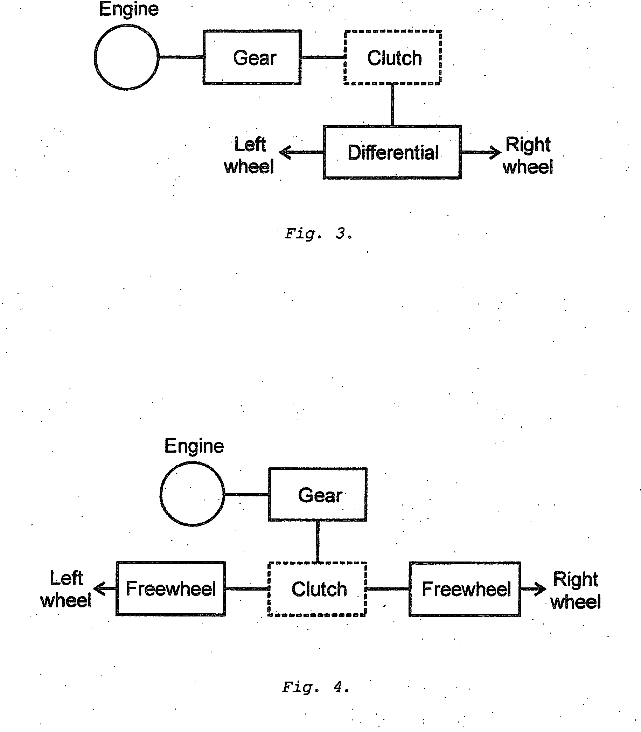

Mechanical components (Fig. 3 or Fig. 4):

a) The engine
This component is a convertor of electric energy to mechanical power. It is possible to use an AC or DC engine but it is very important to choose an engine with good characteristics. In the case of the DC engine it is strongly recommend this set of characteristics:

• Rated power round 40W
• Rated voltage 12V
• Rated revolution around 5000 rev/min
• Maximal revolution around 7000 rev/min

- Rated current around 6A
- Basic torque 700 g/cm

*b) The gear*

The electric engine has a high rated revolution and for this application it is necessary to use gear because the pram needs torque instead of speed. The gear ratio depends on the engine's rated revolution and it is optimal to calculate the maximal pram's speed around 10 km/h. In the case of the recommended engine and 25cm diameter wheels the gear ratio will be 24 to 1.

*c) The clutch*

This component is not necessary for the basic principle of this invention but can provide:

- Smooth start of the propulsion in case $F_p$ increases above $F_{on}$.
- In case of electrical circuits failure the clutch switches off automatically ensuring the safety of the baby.
- The clutch ensures that in case of non active propulsion the engine should not have negative effect on the movement of the pram/stroller. The principle of the slippery clutch is as the same as in the automotive industry. The clutch switching mode is controlled electronically by the CPU.

*d) The differential freewheel*

These components transfer the mechanical power to the left and right wheel independently. The alternative for freewheel (Fig. 4) is cheaper but there is one problem with the rear wheels' freedom of movement in case of backward movement. The rear wheels are locked together during the backward movement. Therefore the best way is to use a small differential whose principle is known from automotive industry.

**Brief description of the drawings**

Fig. 1    The position of the| power unit and the, pressure 5 sensor.

Fig. 2    The principle diagram of electronic components.

Fig. 3    The principle diagram of mechanical components in case of the differential usage.

Fig. 4    The principle diagram of mechanical components in case of the freewheel usage.

Fig. 5    The pressure sensor resistance depending on pressure force.

Fig. 6    The operation flowchart of the CPU software.

**Claims**

1.  A method for controlling electrical propulsion of a pram or stroller,

    wherein an average pushing force of the person who is operating the pram or stroller is determined with respect to a predetermined time period,
    wherein the average pushing force is kept constant regardless of external aspects such as the pram's load, the quality and the tilt of a surface.

2.  The method of claim 1, wherein at least one sensor determines at least one physical variable in addition to the average pushing force, such as a revolution, a tilt, an acceleration, et cetera.

3.  The method of claim 1 or 2, wherein a value for an activation force $F_{on}$ and a value for a deactivation force $F_{off}$ is defined, and wherein the electrical propulsion is activated if the average pushing force exceeds $F_{on}$ and is deactivated when the average pushing force falls below $F_{off}$.

4.  The method of one of the preceding claims, wherein a pressure sensor measures the actual pushing force ($F_p$) for determining the average pushing force.

5.  The method of claim 4, wherein the pressure sensor is placed in the central area of a handle of the pram or stroller.

6.  The method of claim 4 or 5, wherein the pressure sensor is mechanical or electrical.

7.  The method of one of the preceding claims, wherein a speed sensor measures the speed of the pram or stroller, in particular via the number of revolutions of wheels, preferably rear wheels, or of a rear shaft before a differential.

8.  The method of one of the preceding claims, wherein the electrical propulsion comprises a gear and/or a clutch and/or a differential.

9.  The method of one of the preceding claims, wherein the electrical propulsion is PWM-controlled.

10. The method of one of the preceding claims, wherein a microprocessor is provided for controlling the electrical propulsion.

11. A method for electrical propulsion of a pram or stroller including the method of one of the preceding claims.

**12.** An electric propulsion control device for controlling electrical propulsion of a pram or stroller, in particular for the method of one of the preceding claims, being configured so that an average pushing force of the person who is operating the pram or stroller is determined with respect to a predetermined time period, wherein the average pushing force is kept constant regardless of external aspects such as the pram's load, the quality and the tilt of a surface.

**13.** An electric propulsion device for a pram or stroller including an electric propulsion control device of claim 12.

**14.** A pram or stroller including an electric propulsion device of claim 13 or an electric propulsion control device of claim 12.

**Patentansprüche**

**1.** Ein Verfahren zur Steuerung eines elektrischen Antriebs eines Kinderwagens oder Strollers, wobei eine durchschnittliche Schubkraft einer Person, welche den Kinderwagen bedient, ermittelt wird in Bezug auf ein vorbestimmtes Zeitintervall, wobei die durchschnittliche Schubkraft konstant gehalten wird, unabhängig von externen Aspekten wie die Ladung des Kinderwagens, die Untergrundqualität und Neigung einer Fläche.

**2.** Das Verfahren gemäß Anspruch 1, wobei mindestens ein Sensor mindestens eine physikalische Variable zusätzlich zur durchschnittlichen Schubkraft bestimmt, wie beispielsweise eine Umdrehung, eine Neigung, eine Beschleunigung, et cetera.

**3.** Das Verfahren gemäß Anspruch 1 oder 2, wobei ein Wert für eine Aktivierungskraft $F_{on}$ und ein Wert für eine Deaktivierungskraft $F_{off}$ definiert wird, und wobei der elektrische Antrieb aktiviert wird, wenn die durchschnittliche Schubkraft $F_{on}$ übersteigt und deaktiviert wird, wenn die durchschnittliche Schubkraft unter $F_{off}$ fällt.

**4.** Das Verfahren gemäß einem der vorhergehenden Ansprüche, wobei ein Drucksensor die tatsächliche Schubkraft ($F_p$) zur Bestimmung der durchschnittlichen Schubkraft misst.

**5.** Das Verfahren gemäß Anspruch 4, wobei der Drucksensor in einem zentralen Bereich des Griffs des Kinderwagens platziert ist.

**6.** Das Verfahren gemäß Anspruch 4 oder 5, wobei der Drucksensor mechanisch oder elektrisch ist.

**7.** Das Verfahren gemäß einem der vorhergehenden Ansprüche, wobei ein Geschwindigkeitssensor die Geschwindigkeit des Kinderwagens misst, insbesondere anhand einer Umdrehungszahl der Räder, weiter vorzugsweise der Hinterräder, oder einer hinteren Welle vor dem differenzial.

**8.** Das Verfahren gemäß einem der vorhergehenden Ansprüche, wobei der elektrische Antrieb ein Getriebe und/oder eine Kupplung und/oder ein Differential umfasst.

**9.** Das Verfahren gemäß einem der vorhergehenden Ansprüche, wobei der elektrische Antrieb PMW-gesteuert ist.

**10.** Das Verfahren gemäß einem der vorhergehenden Ansprüche, wobei ein Mikroprozessor bereitgestellt ist, um den elektrischen Antrieb zu steuern.

**11.** Ein Verfahren zum elektrischen Antrieb eines Kinderwagens oder Strollers, umfassend das Verfahren nach einem der vorhergehenden Ansprüche.

**12.** Eine Elektroantriebs-Steuervorrichtung zur Steuerung eines elektrischen Antriebs eines Kinderwagens oder Strollers, insbesondere zur Durchführung eines Verfahrens nach einem der vorhergehenden Ansprüche, welche dazu ausgelegt ist eine durchschnittliche Schubkraft einer Person, welche den Kinderwagen bedient, in Bezug auf ein vorbestimmtes Zeitintervall zu ermitteln, wobei die durchschnittliche Schubkraft konstant gehalten wird, unabhängig von externen Aspekten wie die Ladung des Kinderwagens, die Untergrundqualität und Neigung einer Fläche.

**13.** Ein elektrisches Antriebsgerät für einen Kinderwagen oder Stroller umfassend die Elektroantriebs-Steuervorrichtung gemäß Anspruch 12.

**14.** Ein Kinderwagen oder Stroller umfassend ein elektrisches Antriebsgerät gemäß Anspruch 13 oder eine Elektroantriebs-Steuervorrichtung gemäß Anspruch 12.

**Revendications**

**1.** Procédé de commande d'une propulsion électrique d'un landau ou d'une poussette,

dans lequel une force de poussée moyenne de la personne qui actionne le landau ou la poussette est déterminée par rapport à une période temporelle prédéterminée,
dans lequel la force de poussée moyenne est maintenue constante sans tenir compte d'aspects externes tels que la charge du landau, la qualité et l'inclinaison d'une surface.

2. Procédé selon la revendication 1, dans lequel au moins un capteur détermine au moins une variable physique en addition à la force de poussée moyenne, par exemple une rotation, une inclinaison, une accélération, et cætera.

3. Procédé selon la revendication 1 ou 2, dans lequel une valeur pour une force d'activation $F_{on}$ et une valeur pour une force de désactivation $F_{off}$ est définie, et dans lequel la propulsion électrique est activée si la force de poussée moyenne dépasse $F_{on}$ et est désactivée quand la force de poussée moyenne tombe en dessous de $F_{off}$.

4. Procédé selon l'une des revendications précédentes, dans lequel un capteur de pression mesure la force de poussée réelle ($F_p$) pour déterminer la force de poussée moyenne.

5. Procédé selon la revendication 4, dans lequel le capteur de pression est placé dans la zone centrale d'une poignée du landau ou de la poussette.

6. Procédé selon la revendication 4 ou 5, dans lequel le capteur de pression est mécanique ou électrique.

7. Procédé selon l'une des revendications précédentes, dans lequel un capteur de vitesse mesure la vitesse du landau ou de la poussette, en particulier via le nombre de rotations de roues, de préférence de roues arrière, ou d'un arbre arrière avant un différentiel.

8. Procédé selon l'une des revendications précédentes, dans lequel la propulsion électrique comprend un engrenage et/ou un embrayage et/ou un différentiel.

9. Procédé selon l'une des revendications précédentes, dans lequel la propulsion électrique est à commande par modulation de largeur d'impulsion (PWM).

10. Procédé selon l'une des revendications précédentes, dans lequel un microprocesseur est prévu pour commander la propulsion électrique.

11. Procédé pour une propulsion électrique d'un landau une poussette incluant le procédé selon l'une des revendications précédentes.

12. Dispositif de commande de propulsion électrique pour commander une propulsion électrique d'un landau d'une poussette, en particulier pour le procédé selon l'une des revendications précédentes, qui est configuré de telle sorte qu'une force de poussée moyenne de la personne qui actionne le landau ou la poussette est déterminée par rapport à une période temporelle prédéterminée, dans lequel la force de poussée moyenne est maintenue constante sans tenir compte d'aspects externes tels que la charge de la poussette, la qualité et l'inclinaison d'une surface.

13. Dispositif de propulsion électrique pour un landau ou une poussette incluant un dispositif de commande de propulsion électrique selon la revendication 12.

14. Landau ou poussette incluant un dispositif de propulsion électrique selon la revendication 13 ou un dispositif de commande de propulsion électrique selon la revendication 12.

Movement direction

1 - Pressure sensor
2 - Power unit

*Fig. 1.*

*Fig. 2.*

Engine

Gear → Clutch

Left wheel ← Differential → Right wheel

*Fig. 3.*

Engine

Gear

Left wheel ← Freewheel — Clutch — Freewheel → Right wheel

*Fig. 4.*

Fig.5.

Fig.6.

**EP 3 546 316 B1**

**REFERENCES CITED IN THE DESCRIPTION**

**Patent documents cited in the description**

- US 8033348 B
- DE 202011209457 U1
- FR 2688181 A
- DE 202007008851 U1